# EUROPEAN PATENT SPECIFICATION

(11) **EP 3 681 357 B1**
(45) Date of publication and mention of the grant of the patent: **09.08.2023**
(21) Application number: 18856235.9
(22) Date of filing: 14.09.2018
(51) Int. Cl.: A47J 39/02, A47J 39/00, A47J 36/24

(54) **TRAY IDENTIFICATION ACCESSORY FOR FOOD HOLDING DEVICES**
ZUBEHÖR ZUR IDENTIFIZIERUNG VON TABLETTS FÜR LEBENSMITTELHALTEVORRICHTUNGEN
ACCESSOIRE D'IDENTIFICATION DE PLATEAU POUR DISPOSITIFS DE MAINTIEN D'ALIMENTS

(30) Priority: 14.09.2017 US 201762558647 P
(43) Date of publication of application: 22.07.2020
(73) Proprietor: Cleveland Range, LLC, New Port Richey, FL 34655 (US)
(72) Inventor: PATTERSON, Nicholas, M., Odesa FL 33556 (US); FLUCK, Jordan, N., Oldmar FL 34677 (US)
(74) Representative: dompatent von Kreisler Selting Werner - Partnerschaft von Patent- und Rechtsanwälten mbB
(86) International application number: PCT/US2018/051007
(87) International publication number: WO 2019/055744

(56) References cited:
- GB-A- 2 439 042
- US-A1- 2005 211 775
- US-A1- 2007 131 698
- US-A1- 2007 144 202
- US-A1- 2007 251 521
- US-A1- 2007 251 667
- US-A1- 2009 145 305
- US-A1- 2009 199 725
- US-A1- 2015 237 908
- US-A1- 2016 073 821
- US-A1- 2017 290 466

## Description

### BACKGROUND OF THE DISCLOSURE

### 1. Field of the Disclosure

The present disclosure relates to devices for holding food products at desired temperatures while they are waiting to be served to a customer. More particularly, the present disclosure relates to devices and associated methods algorithms for holding food products before service, which do not require a user to manually initiate and control the timing of the food product holding and an apparatus to mount transceivers, for example, radio frequency identification (RFID) tags, on trays that hold food in these devices.

### 2. Description of the Related Art

Hot holding cabinets are used in restaurants to store a plurality of cooked food products when the cook time for a product is longer than the customer expectation for wait time. This allows the restaurant to prepare food ahead of time, in order to meet the customer's expectation of receiving a food product immediately or shortly after ordering. These holding cabinets have storage slots for food product trays, a heat source to keep the food product and their trays at a desired serving temperature, and a product tracking system to perform specific functions such as time tracking, product type identification, product status indications, process indications, audible feedback and alarm generation and display. Cabinets are supplied with prepared food products from a cooking device (e.g., a grill) and are generally capable of holding between 1 to 20 individual trays. Varying technologies are available to hold this food from basic hot shelves up to infrared lamps and convective airflow. The hot holding cabinets preserve the quality of the food allowing great quality food to be served at the pace customers expect.

The product tracking systems are generally comprised of a display (e.g., segmented LED, touch screen) near or correlated to a food holding location in the device, a button (e.g., PCB tactile button, touch screen) to activate/deactivate different functions, and an auxiliary visual indicator (e.g., LED's, LCD display) to communicate the state of the food in the food holding tray relative to key quality metrics. Generally the product tracking systems indicate to the operator where to place the product (product name), the amount of time left before the product must be discarded (hold time), which product tray to use product from, (use first), when to cook more of the product (cook time) and lid and bottom type requirements for holding the product optimally.

Currently available product tracking systems such as those described above require a manual button press to initiate the product tracking sequence. This user-operated button press registers the food holding tray to a food holding location and initiates a sequence of pre-determined logic functions. The initiation of this sequence is imperative to all process and quality functions the holding cabinet performs. One such device is shown in United States Patent No. 7,232,062, to Salerno. As stated at col. 7, I. 12-41, the worker or user must press a manual timing switch both when placing a food pan in a holding station, and when removing it.

In these devices, failure to initiate the process at the correct times adversely affects the quality control process for the food in the holding cabinet. Due to the fast pace in the restaurant kitchen environment, operators often skip, forget, or misuse the manual process initiation step (intentionally or unintentionally), and the quality control process is disrupted or lost. Over an extended period of time, this ultimately results in a negative variance of the food quality being served to customers.

Also, in higher demand restaurants, there are commonly multiple holding cabinets in the kitchen. In this type of restaurant, bulk holding cabinets are used to hold large batches of cooked products and separate, smaller cabinets are used at food assembly locations. Food products within food holding trays are moved from a food holding location on one cabinet to a food holding location on another cabinet. Transferring the product information during a product move generally requires a complex sequence of button presses on both the origination and destination holding cabinet. Again, these sequences are not consistently utilized in the fast paced kitchen environment and food quality is compromised.
Furthermore, a carrier having the features defined within the preamble of claim 1 is described in GB 2 439 042.

Accordingly, there is a need to address these disadvantages of currently available systems.

### SUMMARY OF THE DISCLOSURE

The invention is defined by the features of claim 1, whereby preferred embodiments are defined by the features of the dependent claims.

The present disclosure provides an apparatus to mount transceivers, for example, radio frequency identification (RFID) tags, on trays that hold food in holding cabinets.

A carrier includes a carrier body that is removably connectable to a tray that holds food in a cabinet and a transceiver being connected to the carrier body on a first side. The transceiver is configured so that a reader identifies the tray.

The carrier includes a transceiver that is a first transceiver and further comprises a second transceiver, and the second transceiver is connected to the carrier body on a second side. The first transceiver and the second transceiver are configured so that a reader identifies the same tray by each of the first transceiver and the second transceiver.

The second transceiver can be connected to the carrier body on the second side that is opposite the first side.

The carrier body can be rotated around 180 degrees from a first position to a second position and positioned in the bin in either the first position or the second position so that the reader can read the first transceiver in the first position and the second transceiver in the second position.

The carrier body can have a first piece and a second piece that together form a collar around the tray.

The tray can have a tray body and a rim around an outside of an opening in the tray, and the tray can have a first handle and a second handle connected to opposite sides of an outer surface of the tray so that, in a connected position, the first piece is connected to the second piece around the tray body.

The first piece can be positioned between the rim and one of the first handle and the second handle and the second piece can be positioned between the rim and another of the first handle and the second handle in the connected position to maintain the carrier on the tray.

The first piece can have a first frame that is shaped complementary to a shape of the tray body such that the first frame has two first side pieces and a first end piece forming a U-shape, and the second piece can have a second frame that is shaped complementary to the shape of the tray body such that the second frame has two second side pieces and a second end piece forming a U-shape.

The first piece can have a first connector on an end of each of the two first side pieces and second piece has a second connector on an end of each of the two second side pieces so that the first piece and the second piece are selectively connected and disconnected from one another.

The carrier can have a size so that the tray can be stacked on another tray.

The carrier body can have a single piece that forms a collar around the tray.

The tray can have a plurality of handles that each is positioned through a cutout in one of a first connector and a second connector so that each of the first connector and the second connector connect to one of the plurality of handles and the carrier body to connect the carrier body to the tray.

The carrier body can have at least a first tab and a second tab, and the first tab can be inside of the first connector and the second tab can be inside of the second connector to connect the carrier body to both the first connector and the second connector.

The carrier body can have a first clip member and second clip member that are received in a plurality of apertures in a handle of the tray to secure the carrier body to the tray by snap fit.

The carrier body can have connectors that connect to a plurality of handles of the tray.

The carrier body can have a first side member and a second side member connected by a bottom member forming a U-shape, and the carrier body can have an outer surface and an inner surface, and the inner surface can have a first projection on the first side member and a second projection on the second side member.

The bottom member can cross under the tray and snap the carrier body into place by a first cavity of a depression in the tray receiving the first projection and a second cavity of the depression receiving the second projection on opposite sides of the tray to secure the carrier body to the tray.

At least one handle can extend from the carrier body, and the carrier body can have an opening at a top and an opening at a bottom.

The carrier body can receive the tray through the opening at the top.

### BRIEF DESCRIPTION OF THE DRAWINGS

Fig.1 is a side, perspective view of a cabinet that is one of many cabinets that can be used with a carrier of the present disclosure.
Figs. 2a and 2b are side view of trays that are used in the cabinet of Fig. 1.
Fig. 3 is a schematic drawing of the cabinet of Fig. 1.
Fig. 4 is a flow chart showing one process for moving and reading trays according to the present disclosure.
Fig. 5 is a second flow chart showing additional process steps for reading and transferring trays according to the present disclosure.
Fig. 6 is a top perspective view of a tray that is used in the cabinet of Fig. 1 having a first embodiment of a carrier of the present disclosure shown in a connected configuration.
Fig. 7 is a top perspective view of the tray that is used in the cabinet of Fig. 1 having the first embodiment of the carrier of Fig. 6 shown in a disconnected configuration.
Fig. 8 is a top perspective view of the tray that is used in the cabinet of Fig. 1 having the first embodiment of the carrier of Fig. 6 shown in the connected configuration stacked with two other trays that are used in the cabinet of Fig. 1 each having the first embodiment of the carrier of Fig. 6 shown in the connected configuration.
Fig. 9 is an enlarged, partial top perspective view of the carrier of Fig. 6 shown in the disconnected configuration.
Fig. 10 is an enlarged, partial top perspective exploded view of the carrier of Fig. 6 shown in the disconnected configuration having a transceiver removed therefrom.
Fig. 11 is a top perspective view of a tray that is used in the cabinet of Fig. 1 having a second embodiment of a carrier of the present disclosure shown in a connected configuration.
Fig. 12 is a top perspective view of a tray that is used in the cabinet of Fig. 1 having the second embodiment of the carrier of Fig. 11 shown in a disconnected configuration.
Fig. 13 is a bottom perspective view of a tray that is used in the cabinet of Fig. 1 having a third embodiment of a carrier of the present disclosure shown in a connected configuration.
Fig. 14 is a top perspective view of a fourth embodiment of a carrier of the present disclosure.
Fig. 15 is a top perspective view of a tray that is used in the cabinet of Fig. 1 having the fourth embodiment of the carrier of Fig. 14 shown disconnected from the tray.
Fig. 16 is a top perspective view of a tray that is used in the cabinet of Fig. 1 having the fourth embodiment of the carrier of Fig. 14 shown in the connected configuration.
Fig. 17 is a top perspective view of a fifth embodiment of a carrier of the present disclosure shown as transparent.
Fig. 17A is an exploded perspective view of the fifth embodiment of Fig. 17.
Fig. 18 is a bottom view of the fifth embodiment of the carrier of Fig. 17.
Fig. 19 is a front view of the fifth embodiment of the carrier of Fig. 17.
Fig. 20 is a side view of the fifth embodiment of the carrier of Fig. 17.
Fig. 21 is a partial bottom view of the fifth embodiment of the carrier of Fig. 17 showing a section A designated as in FIG. 18 showing a detailed view of a slot for access to a "pocket" where a transceiver, for example, an RFID cartridge, fits into the carrier.
Fig. 22 is a top perspective view of a cartridge of the fifth embodiment of the carrier of Fig. 17.
Fig. 23 is a front view of the cartridge of Fig. 22.
Fig. 24 is a top view of the cartridge of Fig. 22.
Fig. 25 is a side cross-sectional view of the cartridge of Fig. 22 taken along line A-A of Fig. 23.
Fig. 26 is an exploded perspective view of a sixth embodiment of a carrier of the present disclosure.
Fig. 27 is a front view of the sixth embodiment of the carrier of Fig. 26.
Fig. 28 is a side view of the sixth embodiment of the carrier of Fig. 26.
Fig. 29 is a bottom view of the sixth embodiment of the carrier of Fig. 26.
Fig. 30 is a partial bottom view of the sixth embodiment of the carrier of Fig. 26 showing a section A designated as in FIG. 29 showing a detailed view of a slot for access to a "pocket" where a transceiver, for example, an RFID cartridge, fits into the carrier.
Fig. 31 is a top perspective view of a first piece of the sixth embodiment of a carrier of Fig. 26.
Fig. 32 is a front view of the first piece of Fig. 31.
Fig. 33 is a side view of the first piece of Fig. 31.
Fig. 34 is a top view of the first piece of Fig. 31.
Fig. 35 is a top perspective view of a second piece of the sixth embodiment of a carrier of Fig. 26.
Fig. 36 is a front view of the second piece of Fig. 35.
Fig. 37 is a top view of the second piece of Fig. 35.
Fig. 38 is a side view of the second piece of Fig. 35.

### DETAILED DESCRIPTION OF THE DISCLOSURE

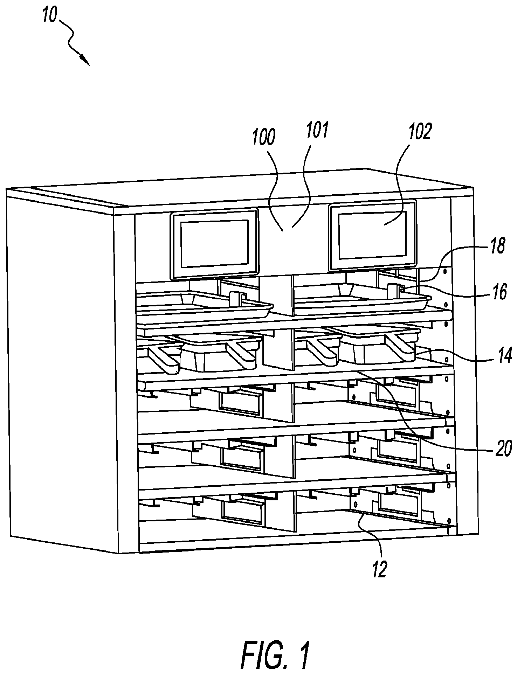

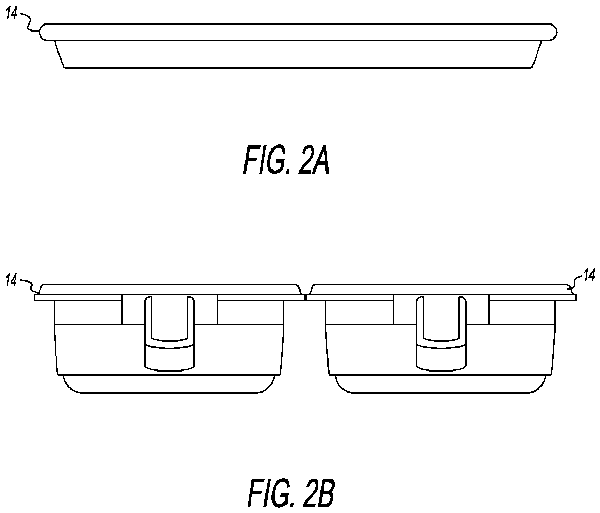

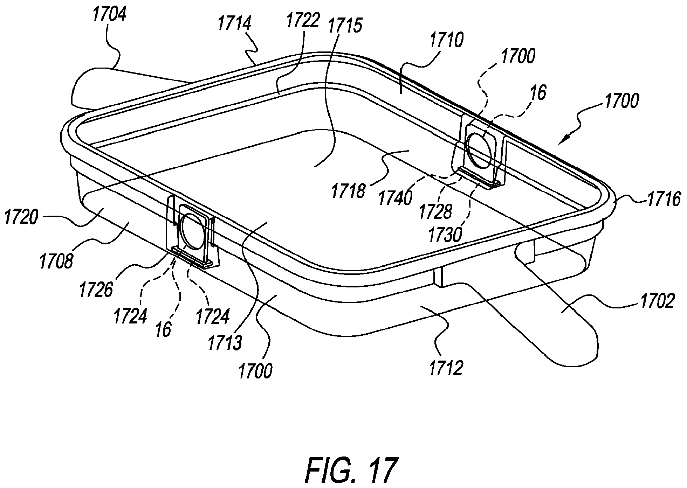

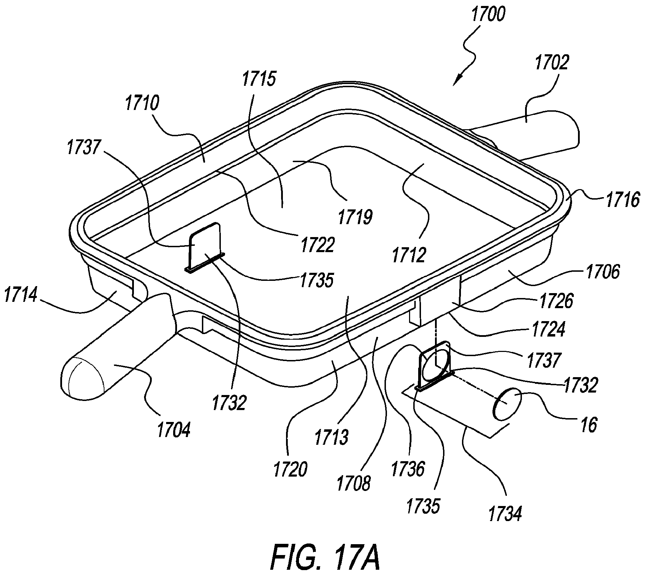

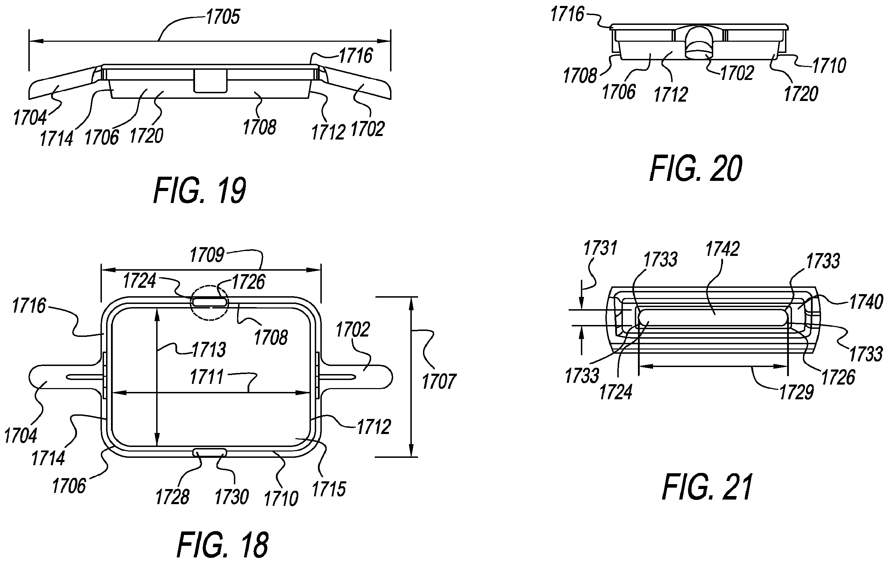

Referring to Figs. 1-3, and in particular Fig. 1, cabinet 10, that is one of many cabinets that can be used with a carrier 612, 1100, 1300, 1400, 1700 and 2600 of the present disclosure, is shown. Cabinet 10 has a plurality of tray storage bins 12. Each of tray bins 12 can receive one or more of trays 14, the latter of which holds one or more food products (not shown). As shown in Figs. 2a and 2b, trays 14 can either have a shallow profile with relatively long sides (Fig. 2a), or be deep with shorter sides (Fig. 2b). There are a multitude of trays which could be used with carrier 612, 1100, 1300, 1400, 1700 and 2600 of the present disclosure including different sizes and different materials , for example, materials including many plastics or metals. There is another tray size shown herein. This tray size fits in a carrier 1700 referenced in Figs. 17 and 17A. The tray in carrier 1700 would look like Fig. 20 and is similar to trays 14 in FIGS. 2a and 2b.The suitable type of tray 14 will depend on the food product to be stored therein. Trays 14 have a transceiver 16 located thereon or connected thereto. As discussed in greater detail below, transceiver 16 can store identity information relating to its associated tray 14. A reader 18 associated with each of bins 12 collects the information from transceiver 16 that relates to the associated tray 14. This information is then relayed to a central processor 100, which tracks the location and identity of each tray 14. Each bin 12 also has a heater 20 associated therewith. As discussed in greater detail below, processor 100 can be in electrical communication with each heater 20, and control the state (on/off) and amount of power supplied to heater 20 as needed, to keep any food products in tray 14 warm.

Processor 100 has an algorithm 101 thereon which calculates and keeps track of such information as, but not limited to, the identity of a tray 14, its location, how long it has been in that location, how long it has been kept heated at an elevated temperature, and how much longer it can be kept heated at the elevated temperature and still satisfy desired food product quality standards. Processor 100 and algorithm 101 can display information relating to each of trays 14 on a user interface (UI) 102. This information displayed on Ul 102 can be, but is not limited to, the type of food product in each tray 14, how long the food in each tray has been heated, how much longer tray 14 can be kept heated before it fails desired product standards, and when too much time has elapsed for the food product to be served to a customer.

Advantageously, all of the above is achieved without the user of cabinet 10 having to input or initiate any programs manually. The user places tray 14 in an available bin 12, and processor 100 and algorithm 101 track all of the relevant information automatically. This eliminates problems with currently available systems. Currently, if a user places a tray into a heated storage bin and forgets to initiate a timer, information relating to the food product is lost. The product may be heated for too long, rendering it unsuitable for serving to a customer. This leads to waste and/or unsatisfied customers. Cabinet 10 of the present disclosure eliminates these disadvantages.

Although the present disclosure is primarily directed to keeping trays 14 at elevated temperatures within bins 12, the devices and methods of the present disclosure could be used to keep trays 14 at ambient temperatures, or to cool them as well. In addition, the term "bin" is used for simplicity, to describe a fully- or semi-enclosed location or zone capable of storing and holding one or more trays.

Each of trays 14 will have a part number and unique identification number associated therewith, stored in transceiver 16. The part number can be associated with a specific food product in tray 14. In this way, processor 100 can keep track both of the identity of tray 14, through its identification number, and the food product therein, via the part number. This part number will indicate the desired heating and storage time for the product in tray 14. A user can input the food product part number associations through interface 102, or via a separate PC application.

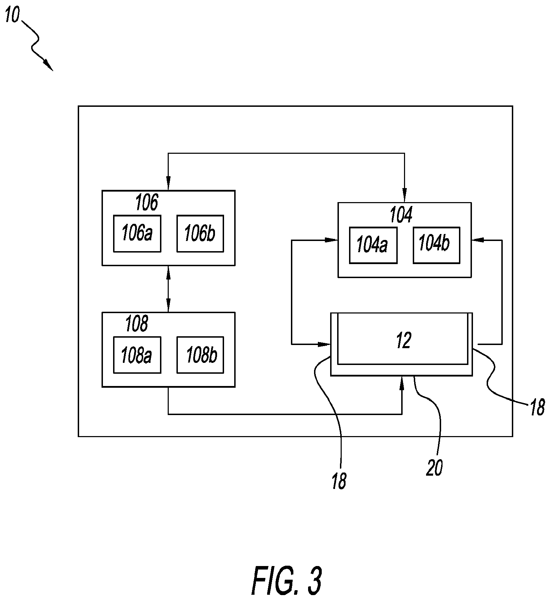

Referring to Fig. 3, a schematic drawing of cabinet 10 is shown. As discussed above, a user places a tray into bin 12. Cabinet 10 has transceiver reader board 104, with transceiver processor 104a and memory 104b, UI board 106 with UI processor 106a and Ul memory 106b, and temperature control 108 with control processor 108a and control memory 108b. Thus, in the shown embodiment, processor 100 is split up into three separate processors, namely transceiver processor 104a, interface processor 106a, and temperature control processor 108a. The present disclosure contemplates that there can be one processor 100 that performs all of the functions described herein, or that processor 100 can be separated into two or more separate processors.

Bin 12, reader 18, reader board 104, Ul board 106, temperature control board 108, and heater 20 are all in electrical communication with one another. When a tray is placed in bin 12, reader 18 reads the information associated with the tray, and relays it to reader board 104. Board 104 then communicates this information to processor 106a and memory 106b of UI board 106. UI processor 106a can display relevant information to the user on interface 102. As the name implies, temperature control processor 108a monitors and controls the temperature of individual bins 12 with heaters 20. Temperature set points can be sent from UI processor 106a, and additional or reduced power can be supplied to heaters 20 as needed. The temperature values of heaters 20 can be reported from control processor 108a back to UI processor 106a. Thus, in this embodiment, UI processor 106a can be an aggregator of the data collected by the other processors 104a and 108a. Again, all of the above monitoring of storage time and heater control is done without any manual input from a user.

The transceivers 16 in the food holding tray 14 can either be passively or actively powered. In the former, the transceivers 16 are powered by readers 18. In the latter, transceivers 16 can have their own power supply, such as a battery. Readers 18 can be powered from the incoming AC electrical power in cabinet 10. In the shown embodiments, transceivers 16 and readers 18 are non-contact, non-optical devices such as radio-frequency devices. The present disclosure contemplates other devices for relaying information from transceiver 16 to reader 18, such as with bar-codes or two-dimensional codes and their associated readers, or magnetic or tape devices. An essential feature of trays 14, transceivers 16, and readers 18 is to be able to consistently and robustly detect the presence of a tray 14 in a bin 12, but not detect neighboring trays 14 unintentionally. There may be one or more transceivers 16 in each tray 14.

The transceivers 16 may be removably connected to the associated tray 14, along interior or exterior surfaces of tray 14. Transceivers 16 may also be molded or otherwise integrally formed into tray 14. There may also be multiple readers 18 for each bin 12.

In one embodiment, transceiver 16 is a one-way communication device, meaning that it only relays information to reader 18. Reader 18 does not write any information back to transceiver 16. In this embodiment, no information about the food products, their location, or the amount of time they have been kept heated is stored on tray 14 or in transceiver 16, but rather on processor 100. This is an improvement over currently available systems that write and store such information on the tray itself. Thus, device 10 does not rely on the clocks being in sync. The current time of day is sent when a tray is transferred to another cabinet, so the expiration time is offset accordingly. For example, if the system times are ten seconds off or out of sync, the expiration time for the food in tray 14 is adjusted by ten seconds. Furthermore, losing the signal during the write process could corrupt the data in transceiver 16. This is also a consideration for memory life where the information from transceiver 16 can be read indefinitely without risk of failure but if information is written to a chip of transceiver 16 repeatedly it would have a specific life. Recognizing that it could be millions of cycles and may never be reached, however, it is of no concern to this embodiment because transceiver 16 , and for example, a RFID tag memory of transceiver 16, is not written to from cabinet 10.

Heaters 20 can be a number of suitable devices for providing heat to bin 12 and tray 14. They can be inductive, conductive (e.g., heated plates), convective (e.g., hot air flow), radiant (e.g. heat lamps, calorimeter rods), and any combination thereof. The heaters 20 are regulated by processor 108a to achieve desired temperature, as described above.

As discussed above, there is one heater 20 for each bin 12. A tray 14 may be in one bin 12, while an adjacent bin 12 is empty. If an operator were to move a tray 14 from one bin 12 to another, as previously discussed, processor 100 will track tray 14 accordingly. However, the heater 20 in the previously empty bin 12 will be inactive until a tray 14 is placed therein. Thus, in one embodiment, the heaters 20 in empty bins 12 may be kept at a reduced (e.g., half) power. When a tray 14 is placed in the empty bin 12, heater 20 will come up to the desired heat level in a reduced amount of time.

In the shown embodiment, cabinet 10 is a cabinet with ten bins 12, in a two-by-five arrangement. Each bin 12 can have space for one or two trays 14. In the embodiment shown in Fig. 1, for example, top bins 12 each store larger tray 14, but the bins lower down store two of the narrower trays 14. The present disclosure contemplates cabinets with anywhere from one bin 12, to one or more bins. In one embodiment there are up to and equal to twenty bins 12. In any of these embodiments, bins 12 could fit multiple trays 14. The cabinets may be sized to fit different needs in different areas of the restaurant. For example, in a service area near the front of the establishment, a smaller cabinet with, for example, four bins 12 may be appropriate. In the rear of the establishment, it may be suitable to have a larger cabinet with up to 20 bins. Cabinet 10 shown in Fig. 1 has 20 individually controlled heaters. Each bin 12 is sized for 2 small trays 14 each with a heater 20 that is an independent heater. A larger tray 14 is controlled by tying two heaters 20 that are smaller two pan heaters of the same bin 12 into the same required temperature setpoint. In regards to sensing transceiver 16 connected to carriers 612, 1100, 1300, 1400, 1700 and 2600 described herein, each location where one or more of trays 14 can be placed only needs to be sensed on one side. Because carriers 612, 1100, 1300, 1400, 1700 and 2600 can have transceivers 16 that are an RFID tag on both sides, the two RFID tags in each of carriers 612, 1100, 1300, 1400, 1700 and 2600 can be programmed with the same unique identifier. Each carrier 612, 1100, 1300, 1400, 1700 and 2600 has the same unique identifier programmed into each side so that when it is put in place, and only sensed on one side, either side is read as the same carrier. However, no two carriers are ever programmed the same. So both sides of each of carriers 612, 1100, 1300, 1400, 1700 and 2600 are programmed identically, but uniquely from any other carrier ever made. This allows either side of carriers 612, 1100, 1300, 1400, 1700 and 2600 to be sensed by an antenna on either side of tray 14 and be recognized by cabinet 10.

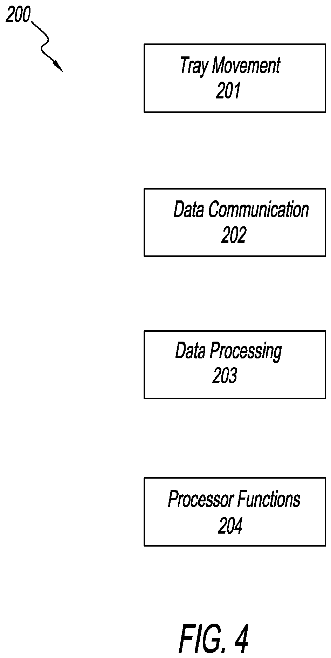

Referring to Fig. 4, a process 200 for receiving a tray 14 is shown. As previously discussed, multiple transceivers 16 are built into or connected to each carrier 612, 1100, 1300, 1400, 1700 and 2600 connected to tray 14, to uniquely identify each tray 14. A single or multiple readers 18 are built into each bin 12, to uniquely identify each food holding location. The process 200 for identifying a food holding tray in a food holding location comprises the following steps:
Step 201, tray 14 is placed in a bin 12;
Step 202, transceiver 16 and reader 18 communicate a pre-determined set of information to processor 100;
Step 203, processor 100 identifies which reader 18 received the communication, and the ID of the food holding tray transceiver 16;
Step 204, processor 100 uses the above information to perform logical functions which may include, but are not limited to: initiating a timer to track the time that tray 14 is within bin 12, initiating a change in the holding temperature within bin 12 (e.g., by changing the power supplied to heater 20), initiating a holding profile for tray 14 (time versus temperature), prompting a user for input, and initiating an audible or visual alarm or displaying visual indicators. The holding profiles define how long to hold the food and at what temperature. They could also define multiple stages where the temperature is different throughout each stage.

Another significant advantage of the devices of the present disclosure as compared to currently available systems is that the devices, methods, and algorithms disclosed therein can accommodate for multiple devices or cabinets 10 within the same establishment. When multiple cabinets 10 are in the same location, the cabinets 10 may be connected to one another to allow communication of information between separate cabinets 10 and to the internet. Multiple cabinets could be connected to one another with a wired (e.g., Ethernet) or wireless (e.g., WiFi) connection. Thus, even if a user moves a tray 14 from one cabinet 10 to a separate cabinet 10, processor 100 and algorithm 101 allow for the tracking of the tray 14 across multiple cabinets 10. Processor 100 will thus know how much longer a food product in a specific tray 14 can be kept heated before being served, even when that tray 14 is moved from one cabinet 10 to another.

In this embodiment, if a tray 14 arrives at a bin 12, processor 100 will inquire all connected cabinets 10 for information associated with the transceiver 16 on tray 14. If tray 14 was previously registered to another bin 12, either within the same cabinet 10 or another cabinet 10, the associated information is transferred to the new cabinet 10 and/or bin 12 automatically. This allows inter- and intra- cabinet transfers to be handled in identical fashion. While this embodiment can be used, it has been determined by the inventors that it is advantageous for processor 100 of a first cabinet of cabinets 10 to communicate to all other connected cabinets 10 information associated with transceivers 16 on trays 14 in the first cabinet, in other words, for the first cabinet to always be publishing a "list of what tags I have" to the entire store at determined intervals (for example, every second) rather than only publish the information associated with transceivers 16 on trays 14 in the first cabinet on an event, for example an event of a tray being inserted. This way even if one of cabinets 10 becomes disconnected from a network of cabinets 10 the disconnected cabinet 10 would know that a first of transceivers 16 it just sensed was started 5 minutes ago in a different cabinet 10 and always keep the latest information. In this case, the disconnected cabinet 10 that received one tray 14 having transceiver 16 including, for example, a RFID tag, would try to publish that the receiving cabinet 10 received the one tray 14, but since it is disconnected from the network, it would not be able to communicate with another cabinet 10. In that case the other cabinet 10 would still keep the timer going. But in a great way, if the disconnected cabinet 10 then reconnects, then the disconnected cabinet 10 is able to publish that it does indeed have the one tray 14and the other cabinet 10 would release the timer and remove it from its screen and remove transceiver 16 of the one tray 14 from the "list of what tags I have". This has turned into a self-healing network, where the network as described would be less susceptible to slow data transfer and any form of network disconnections.

In this embodiment, with multiple cabinets 10, each cabinet 10 may be of a different size and with a different number of bins 12. Again, this is because the organization of the restaurant or space constraints may mean that certain sizes are more suitable for different areas.

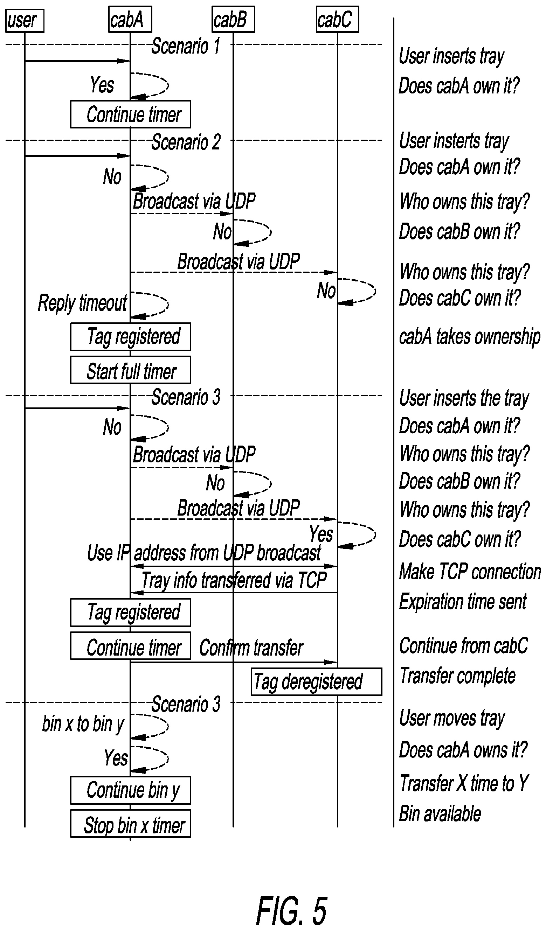

Referring to Figure 5, a process diagram for an embodiment where there are multiple cabinets 10 is shown. Here, there are three cabinets 10, referred to as cabA, cabB, and cabC. In a Scenario 1, a user inserts tray 14 into a bin 12 in cabA. Processor 100 determines whether tray 14 is registered to cabA, meaning that it had previously been in either the same or a different bin 12 within cabA. If the answer is yes, then processor 100 continues a timer associated with the amount of time tray 14 has been in cabA.

Scenario 2 of Fig. 5 illustrates what happens when a user inserts a tray 14 into cabA, and tray 14 had not previously been associated with or located in cabA. Processor 100 will check with the other cabinets in the system, namely cabB and cabC, to see if tray 14 is registered with any of them. If not, processor 100 gives ownership of tray 14 to cabA, by registering the information in the transceiver 16 to cabA, and starting the necessary timers.

In Scenario 3, a user places tray 14 into cabA. As in Scenario 2, processor 100 surveys cabB and cabC to determine if tray 14 had been registered in either of those two locations. In Scenario 3, processor 100 determines that tray 14 had previously been located in cabC. Processor 100 then transfers all of the information associated with tray 14 and transceiver 16 from cabC to cabA, continues the timer, and deregisters tray 14 from cabC. Scenario 3 can be applicable when a user either deliberately or inadvertently transfers tray 14 before its associated timer has lapsed. For example, tray 14 can be placed in cabC, and have a timer of fifteen minutes associated therewith, reflecting the maximum amount of time that food in tray 14 can be heated before it needs to be served to a customer. If a user removes tray 14 from cabC after six minutes and places it in cabA, processor 100 will accommodate for this. Processor 100 will deregister tray 14 from cabC, and restart the timer and heater for tray 14 in cabA (i.e., at six minutes, with nine minutes left).

In Scenario 4, a user transfers tray 14 from one bin 12 in cabA into another bin 12 within the same cabA. Processor 100 detects this, and sets the timers accordingly for the first and second bins 12.

Algorithm 101 of the present disclosure can have a function whereby the state of all the readers 18 in each of bins 12 is saved to memory ("update antenna data array"). This step prevents the data collected during operation to be saved in the event of a power loss or system interruption.

In other embodiments, algorithm 101 may have additional features that improve the user experience. Algorithm 101 may control Ul 102 to display the remaining time on all food trays 14 within a cabinet 10, and identify the one that should be drawn from first based on the least amount of time remaining. Algorithm 101 may also be able to determine when a tray 14 has been out of the cabinet for too long a time, and alert the user that the food therein is no longer usable. For example, if a user withdraws tray 14 from cabinet 10 to retrieve a food product, and forgets to place tray 14 back into cabinet 10 within a set period of time, algorithm 101 and processor 100 can track this. Another feature would allow a user to deregister a tray 14 from cabinet 10 by waving it over an antenna in a separate part of the restaurant. For example, a user may wish to withdraw a tray 14 at the end of a business day, to dispose of food therein, and/or clean tray 14. There can be a separate antenna (not shown) in communication with processor 100 and algorithm 101 that allows the user to deregister tray 14 by bringing it into proximity with the antenna.

Although the present disclosure has described heating bins 12 and the food products therein, cabinet 10, processor 100, and algorithm 101 can operate without heating the food. In this embodiment, processor 100 would track the food products and trays 14 passing between bins 12 without necessarily keeping them heated.

In another embodiment, processor 100 can be configured to provide an alarm or indication when a tray 14 is placed in a bin 12 where it is not registered or expected. The alarm can be an audio alarm, or can be a display on UI 102.

As discussed above, cabinet 10 has timers that tell the users when food is too old to meet quality standards and should be discarded. One of the major concerns in such hot holding cabinets is that the operators are commonly too busy to start these timers. Without the timers starting, there is no notification when the food should be discarded.

To relieve this concern, also as discussed herein, cabinet 10 senses when trays 14 are in place and start these timers automatically, for example, by radio frequency identification (RFID), that is used. Receivers 18, for example, antennas, in cabinet 10 can sense information on transceivers 16, for example, RFID tags that include a unique identifier for each food and a unique identifier for each tray, and know what tray 14 or product is in place and either start a timer, or alarm if tray 14 or food is in the wrong location. To keep costs low, receivers 18 generally sense only one area for each bin 14. Typically this would be on a side-wall, center-fin, or front or back area on tray 14. Transceivers 16 on trays 14 are mounted in two locations on each tray 14. The front and back or on both sides of tray 14 are locations for transceivers 16. This is because as shown in Fig. 1, trays 14 shown in Fig. 2b, can be inserted in one direction, but also spun around 180 degrees and inserted in the exact opposite direction in bin 12. Since cabinet 10 usually is only sensing one side of tray 14, transceivers for both locations on tray 14 needs to be the same so that readers 18 know that tray 14 is the same exact tray 14 of food.

Tray 14 could be created to have pockets on each side or front and back where transceivers 16 can be mounted. However, having transceivers 16 permanently mounted onto tray 14 directly limits flexibility in the restaurant and would require new trays 14 every time a new product is developed.

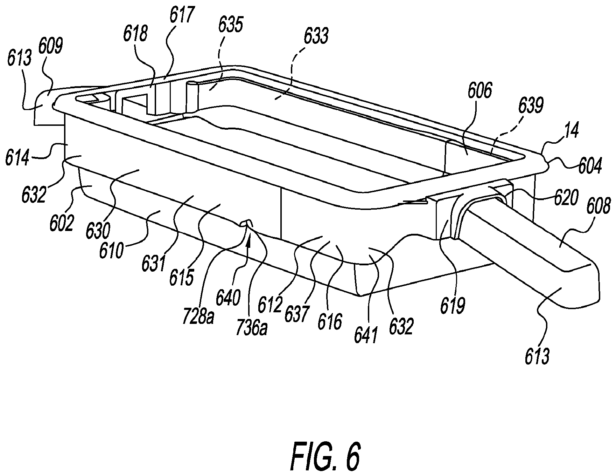

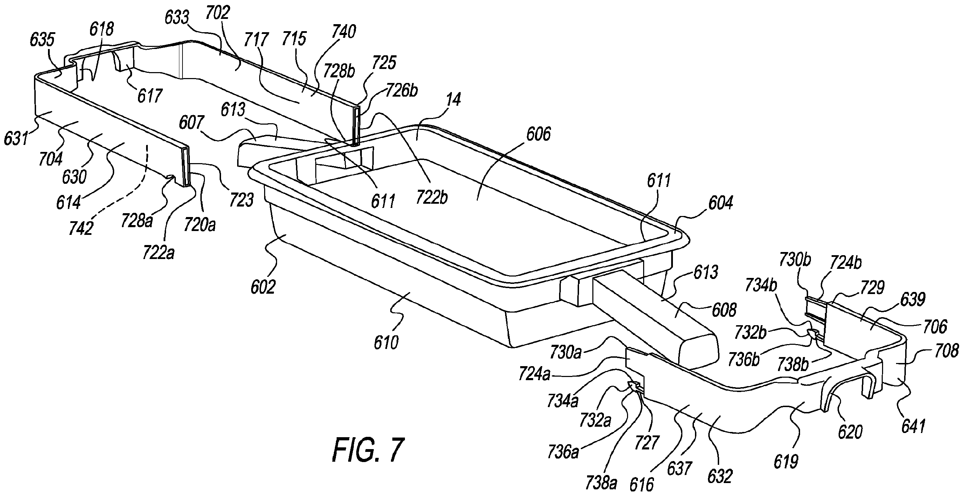

Referring to Figs. 6 and 7, tray 14 as shown in Fig. 2b has a body 602 and rim 604. Rim 604 is connected around an outside of an opening 606 in tray 14. Tray 14 has handles 608, 609 connected to opposite sides of an outer surface 610 of tray 14. Handles 608, 609 are the same shape. Each of handles 608, 609 has a connection portion 611 and a grip portion 613.

Tray 14 connects to a transceiver 16 by a carrier 612. Transceiver 16 is connected to a transceiver assembly 715. Transceiver assembly 715 connects transceiver 16 to carrier 612. Alternatively, transceiver 16 can be directly connected to carrier 612. Carrier 612 has a first piece 614 and a second piece 616 that together form a carrier body 615 that is a collar around tray 14. First piece 614 has a first frame 630 that is shaped complementary to a shape of body 602 of tray 14 such that first frame 630 has two side pieces 631, 633 and an end piece 635 forming a U-shape. End piece has a protruded portion 617 having a cutout 618. Second piece 616 has a second frame 632 that is shaped complementary to the shape of body 602 of tray 14 such that second frame 632 has two side pieces 637, 639 and an end piece 641 forming a U-shape and a protruded portion 619 having cutout 620.

Referring to Fig. 7, first piece 614 has a first inner surface 702 and a first outer surface 704 and second piece 616 has a first inner surface 706 and a first outer surface 708. First piece 614 has a connector 722a on end 723 and a connector 722b on end 725 and second piece 616 has a connector 724a on end 727 and a connector 724b on end 729. Connector 722a has opening 726a and opening 728a and connector 722b has opening 726b and opening 728b. Connector 724a has member 730a and member 732a and connector 724b has member 730b and member 732b. Member 732a is shaped to have inclined surface 734a, 736a that incline upward toward end 727 and form a back surface 738a. Member 732b is shaped to have inclined surface 734b, 736b that incline upward toward end 729 and form a back surface 738b.

First piece 614 and second piece 616 are selectively connected and disconnected from one another. To connect first piece 614 and second piece 616, first piece 614 has protruded portion 617 having cutout 618 that receives handle 609 so that protruded portion 617 is positioned over connection portion 611 of handle 609. Second piece 616 has protruded portion 619 with cutout 620 that receives handle 608 so that protruded portion 619 is positioned over connection portion 611 of handle 608. Connector 722a receives connector 724a forming a snap fit maintaining connector 724a in connector 722a. Member 730a and member 732a are inserted into opening 726a so that incline surface 736a contacts an interior of first connector 722a to deform member 732a upward against a downward bias of member 732a until back surface 738a is moved over opening 728a positioning a portion of member 732a into opening 728a by the downward bias of member 732a. Connector 722b receives connector 724b forming a snap fit maintaining connector 724b in connector 722b. Member 730b and member 732b are inserted into opening 726b so that incline surface 736b contacts an interior of first connector 722b to deform member 732b upward against a downward bias of member 732b until back surface 738b is moved over opening 728b positioning a portion of member 732b into opening 728b by the downward bias of member 732b. When First piece 614 and second piece 616 are connected, first piece 614 is positioned between rim 604 and handle 609 and second piece 616 is positioned between rim 604 and handle 608. First piece 614 and second piece 616 are sized so that carrier 612 is confined between rim 604 and handles 608, 609 in the connected position to maintain carrier 612 on tray 14. A different version of first piece 614 or second piece 616 can be developed to fit on tray 14 with only one of handles 608, 609.

To disconnect first piece 614 from second piece 616, an upward force 640 (FIG. 6) is applied to incline surface 736a moving back surface 738a out of opening 728a and an upward force is applied to incline surface 736b moving back surface 738b out of opening 728b allowing movement of second piece 616 away from first piece 614. First piece 614 is moved off of handle 609 and second piece 616 is moved off of handle 608 removing carrier 612 from tray 14.

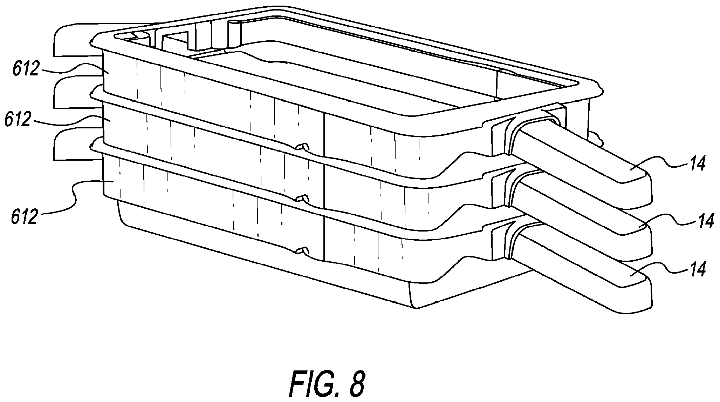

Referring to FIG. 8, carrier 612 has a size so that tray 14 can be stacked on another tray 14. Carrier 612 has a size so that tray 14 can be stacked on another tray 14 without wedging into place that would cause difficult removal.

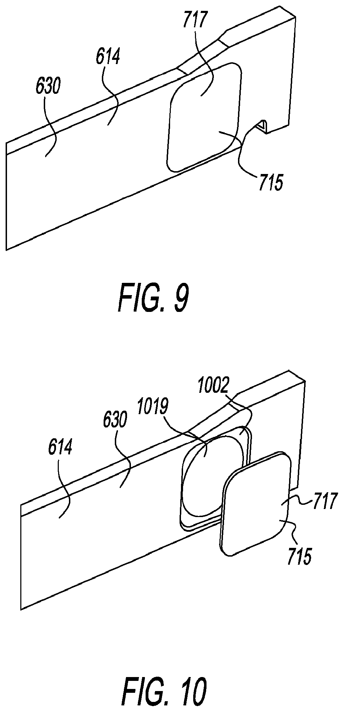

Referring to FIGS. 9 and 10, first piece 614 has transceiver 16 connected to first frame 630 either directly or by way of transceiver assembly 715 that is a housing 717 enclosing transceiver 16. First piece 614 has a depression 1002 in first inner surface 702 of first frame 630. Depression 1002 receives transceiver assembly 715 to connect transceiver 16 to first frame 630. Transceiver assembly 715 can connect to first frame 630, for example, by potting transceiver into place using a curing epoxy or other sealant. Transceiver 16 could be installed from first inner surface 702, first outer surface 704 or both of first frame 630 and then adhered into place with either pressure or heat sensitive adhesive, an epoxy, silicone, or a more permanent ultrasonic weld between a material, for example, plastic, of first frame 630 and housing 717 that is a plastic cap. Housing 717 that is the plastic cap is ultrasonically welded over transceiver 16 that is an RFID tag (not shown). The RFID tag would fit into the circular depression 1019. Alternatively, a housing of transceiver assembly 715, for example, made of plastic, could also slide into a pocket and be glued or welded in from a bottom of first piece 614.

Referring back to Fig. 7, tray 14 has two of transceivers 16 in transceiver assemblies 715 mounted in a first location 740 and a second location 742 of carrier 612. First location 740 is on side piece 633 of first piece 614 and second location 742 is on side piece 631 of first piece 614. Alternatively, one of the two of transceivers 16 is positioned on end piece 635 of first piece 614 and another of the two of transceivers 16 is on end piece 641 of second piece 616. Another alternative is that first location 740 can be on side piece 639 of second piece 616. Still another alternative is that second location 742 can be on side piece 637 of second piece 616. Tray 14 can be inserted into bin 12 in a first position as shown in Fig. 1 so that transceiver 16 at first location 740 can be read by reader 18, but tray 14 can also be rotated around 180 degrees from the first position and inserted into bin 12 in the exact opposite direction in a second position so that transceiver 16 at second location 742 can be read by reader 18. Since reader 18 is only sensing one side of tray 14, transceivers 16 for both first location 740 and second location 742 are configured so that reader 18 identifies the same tray 14 and same food product in tray 14 by each of the two transceivers 16 located at first location 740 and second location 742 in both the first position and rotated around 180 degrees from the first position in the second position when tray 14 is in bin 12.

Transceivers 16 mounted onto carrier 612 allow users to be flexible in a restaurant and so that new trays 14 are not required every time a new product is developed, rather, carrier 612 is easily removable from trays 14 and replaceable. Moreover, carrier 612 can mount on existing trays 14, saving customers significant cost by not replacing all trays 14 in their store.

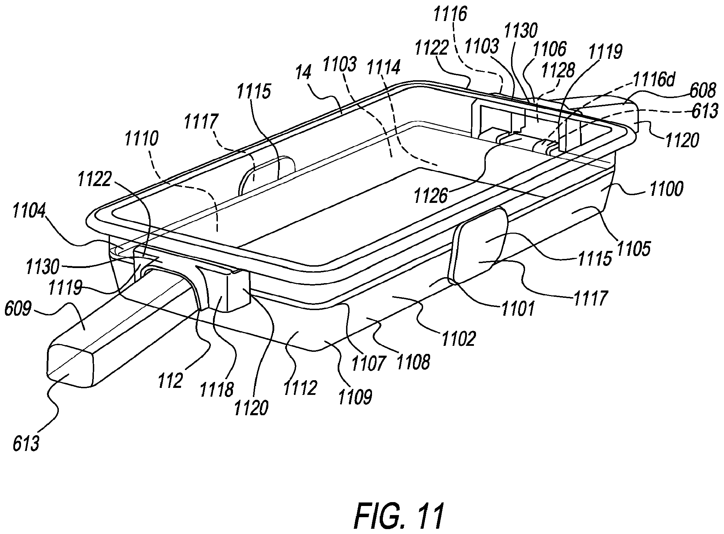

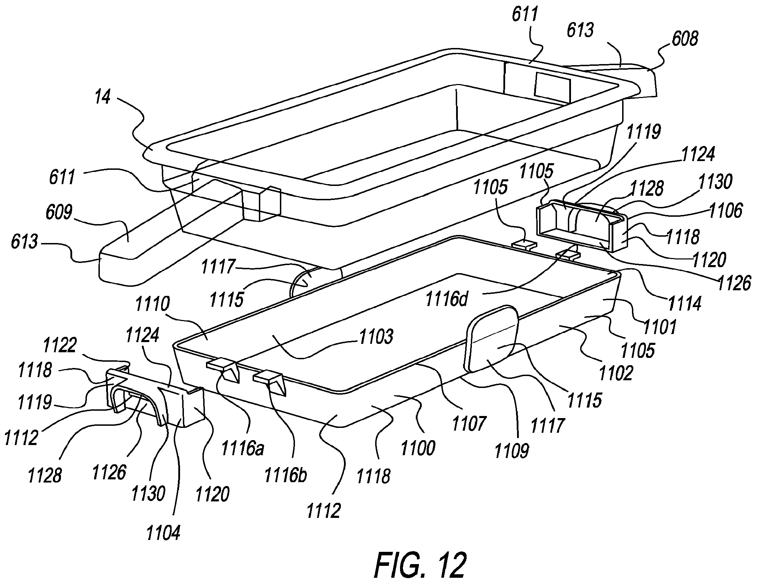

Referring to Figs. 11-12, another embodiment of a carrier 1100 is shown that connects to tray 14 of Fig. 2b. Tray 14 connects to transceiver 16 by a carrier 1100. Transceiver 16 is connected to a transceiver assembly 1115. Transceiver assembly 1115 connects transceiver 16 to carrier 1100. Alternatively, transceiver 16 can be directly connected to carrier 1100. Carrier 1100 has a collar 1102 and connectors 1104, 1106. Collar 1102 is a carrier body 1101 that has a complimentary shape to body 602 of tray 14, for example, collar 1102 is a one-piece plastic loop that could slide onto the bottom of tray 14. Collar 1102 tapers from a top 1107 to a bottom 1109 so that collar 1102 has a larger perimeter at top 1107 than at bottom 1109. Collar 1102 has an inner surface 1103 that faces tray 14 and an outer surface 1105 opposite inner surface 1103. Collar 602 has side members 1108, 1110 that are connected by end members 1112, 1114. Side members 1108, 1110 are each connected to transceiver 16. Each of end members 1112, 1114 have tabs 1116a, 1116b, 1116c, 1116d. Tabs 1116a, 1116b, 1116c, 1116d each are L-shaped so that tabs 1116a, 1116b, 1116c, 1116d each protrude upward and away from outer surface 1105.

Each of connectors 1104, 1106 has a connector body 1118 that has cover portion 1119 that is a complementary shape to fit over connection portion 611 of handles 608, 609. Cover portion 1119 has side walls 1120, 1122 and a top wall 1124. Side walls 1120, 1122 are connected by a bottom wall 1126. Each of connectors 1104, 1106 has a cutout 1128 sized to surround grip portion 613 of handles 608, 609. A wall 1130 extends from a perimeter of cutout 1128. Wall 1130 has a complementary shape of each of handles 608, 609.

In a connected position, tray 14 is inserted into collar 1102 through top 1107. Collar 1102 is around body 602 of tray 14 positioning tabs 1116a, 1116b below handle 609 and tabs 1116c, 1116d below handle 608. Handle 609 is positioned through cutout 1128 of connector 1104 so that cover portion 1119 of connector 1104 covers connection portion 611 of handle 609 and wall 1130 covers a portion of grip portion 613 of handle 609 in the connected position positioning tabs 1116a and 1116b above bottom wall 1126 inside of connector 1104. Handle 608 is positioned through cutout 1128 of connector 1106 so that cover portion 1119 of connector 1106 covers connection portion 611 of handle 608 and wall 1130 covers a portion of grip portion 613 of handle 608 in the connected position positioning tabs 1116c and 1116d above bottom wall 1126 inside of connector 1106. Positioning tabs 1116a and 1116b inside of connector 1104 and tabs 1116c and 1116d inside of connector 1106 maintains collar 1102 on tray 14. To disconnect carrier 1100 from tray 14, connector 1104 is moved off of handle 609 and connector 1106 is moved off of handle 608 allowing tray 14 to be moved out of collar 1102.

Transceivers 16 can connect to collar 1102 either directly or by way of transceiver assembly 1115 that is a housing 1117 enclosing transceiver 16. Transceivers 16 connect to collar 1102, for example, by potting transceiver into place using a curing epoxy or other sealant. Transceivers 16 could be installed from inner surface 1103, outer surface 1105 or both of collar 1102 and then adhered into place with either pressure or heat sensitive adhesive, an epoxy, silicone, or a more permanent ultrasonic weld between a material, for example, plastic, of collar 1102 and housing 1117 that is a plastic cap, or transceiver 16 can be ultrasonically welded between two layers of material of housing 1117. Alternatively, transceiver assembly 1115 can have a housing, for example, made of plastic, housing transceiver 16 that could also slide into a pocket and be glued or welded in from a bottom of collar 1102. Alternatively, transceivers can be on opposite sides of tray 14 having handles 608, 609.

Accordingly, transceivers 16 are mounted on trays 14 in two locations by carrier 1100 allowing trays 14 to be inserted in one direction as shown in Fig. 1 so that reader 18 reads transceiver 16 on side member 1108, but also spun around 180 degrees and inserted in the exact opposite direction in bin 12 so that reader 18 reads transceiver 16 on side member 1110. Since cabinet 10 usually is only sensing one side of tray 14, transceivers 16 for both locations on carrier 1100 are the same so that readers 18 know that tray 14 is the same exact tray 14 of food. Transceivers 16 mounted onto carrier 1100 allow users to be flexible in a restaurant and so that new trays 14 are not required every time a new product is developed, rather, carrier 1100 is easily removable from trays 14 and replaceable. Moreover, carrier 1100 can mount on existing trays 14, saving customers significant cost by not replacing all trays 14 in their store.

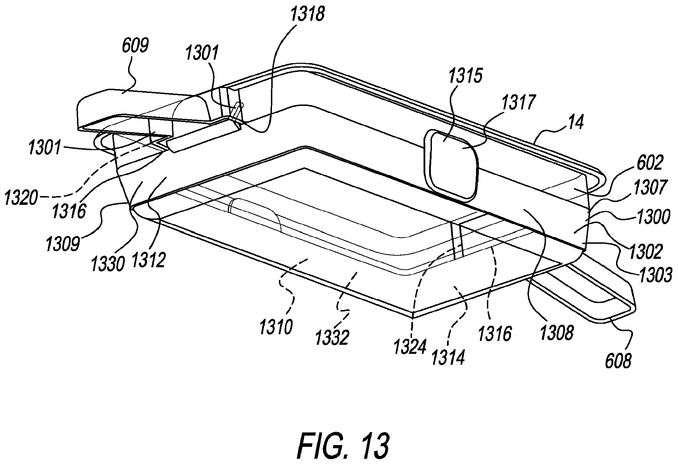

Referring to FIG. 13, another embodiment of a carrier 1300 is shown that connects to tray 14 of Fig. 2b. Tray 14 connects to transceiver 16 by a carrier 1300. Transceiver 16 is connected to a transceiver assembly 1315. Transceiver assembly 1315 connects transceiver 16 to carrier 1100. Alternatively, transceiver 16 can be directly connected to carrier 1300. Tray 14 has apertures 1301 through connection portion 611 of each of handles 608, 609. Carrier 1300 has a collar 1302 that is a carrier body 1303. Collar 1302 has a complimentary shape to body 602 of tray 14, for example, collar 1302 is a one-piece plastic loop that could slide onto the bottom of tray 14. Collar 1302 tapers from a top 1307 to a bottom 1309 so that collar 1302 has a larger perimeter at top 1307 than at bottom 1309. Collar 1302 has side members 1308, 1310 that are connected by end members 1312, 1314. End member 1312 has a connector support 1316 and a first clip member 1318 and a second clip member 1320. End member 1314 has a connector support (not shown) that is the same as clip support 1316 and a first clip member (not shown) and a second clip member 1324 that are the same as first clip member 1318 and second clip member 1320.

In a connected position, tray 14 is inserted into collar 1302 through top 1307. First clip member 1318 and second clip member 1320 are urged toward one another and inserted into connection portion 611 of handle 609 and positioned into apertures 1301 through connection portion 611 of handle 609 to secure collar 1302 to tray by snap fit. The first clip member of end member 1314 and second clip member 1324 are urged toward one another and inserted into connection portion 611 of handle 608 and positioned into apertures 1301 through connection portion 611 of handle 608 to secure collar 1302 to tray 14 by snap fit. To disconnect collar 1302 from tray 14, first clip member 1318 and second clip member 1320 are urged toward one another and removed from apertures 1301 through connection portion 611 of handle 609 and the first clip member of end member 1314 and second clip member 1324 are urged toward one another and removed from apertures 1301 through connection portion 611 of handle 608 so that collar 1302 can be moved away from tray 14.

Alternatively, tray 14 does not have apertures 1301 through connection portion 611 of each of handles 608, 609, and, instead, first clip member 1318 and second clip member 1320 can connect to connection portion 611 of handle 609 by friction fit or adhesive and the first clip member of end member 1314 and second clip member 1324 connect to connection portion 611 of handle 608 by friction fit or adhesive.

Another alternative replaces first clip member 1318 and second clip member 1320 and the first clip member of end member 1314 and second clip member 1324 with connectors that can connect around each of handles 608, 609.

Transceivers 16 can connect to collar 1302 either directly or by way of transceiver assembly 1315 that is a housing 1317 enclosing transceiver 16. Transceiver 16 connects to collar 1302, for example, by potting transceiver into place using a curing epoxy or other sealant. Transceivers 16 could be installed from an inner surface 1330, an outer surface 1332 or both of collar 1302 and then adhered into place with either pressure or heat sensitive adhesive, an epoxy, silicone, or a more permanent ultrasonic weld between a material, for example, plastic, of collar 1302 and housing 1317 that is a plastic cap, or transceiver 16 can be ultrasonically welded between two layers of material of housing 1317. Alternatively, transceiver assembly 1315 can have a housing, for example, made of plastic, housing transceiver 16 that could also slide into a pocket and be glued or welded in from a bottom of collar 1302. Alternatively, transceivers can be on opposite sides of tray 14 having handles 608, 609.

Accordingly, transceivers 16 are mounted on tray 14 in two locations by carrier 1300 allowing tray 14 to be inserted in one direction as shown in Fig. 1 so that reader 18 reads transceiver 16 connected to side member 1308, but also spun around 180 degrees and inserted in the exact opposite direction in bin 12 so that reader 18 reads transceiver 16 connected to side member 1310. Since cabinet 10 usually is only sensing one side of tray 14, transceivers 16 for both locations on carrier 1300 are the same so that readers 18 know that tray 14 is the same exact tray 14 of food. Transceivers 16 mounted onto carrier 1300 allow users to be flexible in a restaurant and so that new trays 14 are not required every time a new product is developed, rather, carrier 1300 are easily removable from trays 14, respectively, and replaceable.

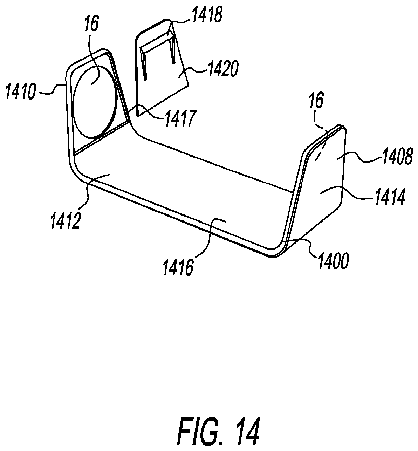

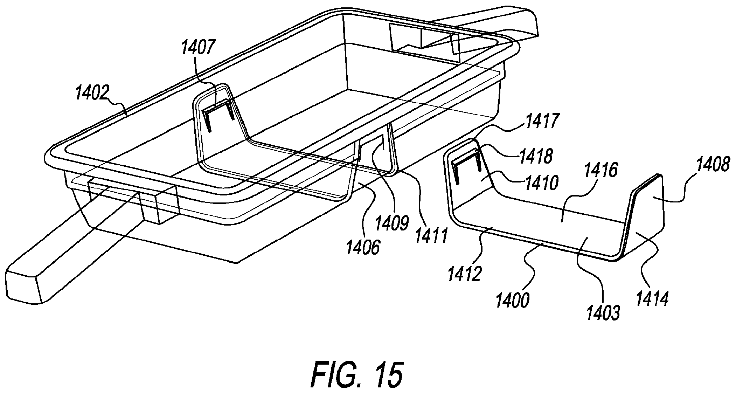

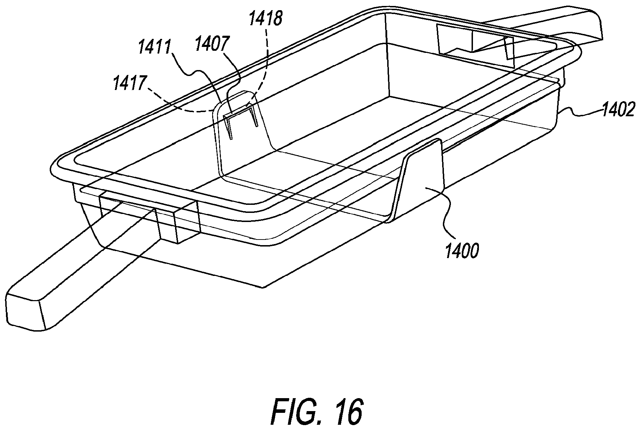

Referring to FIGS. 14-16, another embodiment of a carrier 1400 is shown that connects to a tray 1402. Tray 1402 connects to transceiver 16 by a carrier 1400. Tray 1402 is the same as tray 14 of Fig. 2b except tray 1402 has a depression 1406. Depression 1406 is a complementary shape to carrier 1400 so that carrier 1400 fits in depression 1406. Depression 1406 has a first cavity 1407, a second cavity 1409 and a groove 1411. Carrier 1400 has side members 1408, 1410 connected by a bottom member 1412 forming a carrier body 1403 that is a U-shape. Carrier 1400 has an outer surface 1414 and an inner surface 1416. Inner surface 1416 has a first projection 1418 on side member 1410 and a second projection (not shown) that is the same as first projection 1418 on side member 1408. Carrier 1400 has a ridge 1417 that projects from inner surface 1416 around a perimeter of carrier body 1403. First cavity 1407 of depression 1406 is shaped to receive first projection 1418 and second cavity 1409 of depression 1406 is shaped to receive the second projection. Groove 1411 is shaped to receive ridge 1417. Carrier 1400, for example, is a molded plastic piece.

Bottom member 1412 crosses under tray 1402 and then snaps carrier 1402 into place by groove 1411 receiving ridge 1417, first cavity 1407 of depression 1406 receiving first projection 1418 and second cavity 1409 of depression 1406 receiving the second projection to secure carrier 1400 to tray 1402 in a connected position. To disconnect carrier 1400 from tray 1402, side member 1408 and side member 1410 are moved away from each other deforming carrier body 1403 to remove ridge 1417 from groove 1411, remove first projection 1418 from first cavity 1407 of depression 1406 and remove the second projection from second cavity 1409 of depression 1406 allowing tray 1402 and carrier 1400 to be moved apart. Side member 1408 and side member 1410 move toward each other after tray 1402 is removed from carrier 1400 returning carrier body 1403 to its original shape as shown in Figs. 14-16. Accordingly, the molded in feature of ridge 1417 snaps into groove 1411 so that carrier 1400 and tray 1402 snap together. Pulling side member 1408 and side member 1410 away from tray 1402 will disengage carrier 1400 from tray 1402 so carrier 1400 will disconnect from tray 1402. The upward turned sides of side member 1408 and side member 1410 are tighter than a width of tray 1402, so when side member 1408 and side member 1410 are slid up and into place on tray 1402, side member 1408 and side member 1410 are always in tension toward tray 1402. Thus, by ridge 1417 snapping into groove 1411, first cavity 1407 of depression 1406 receiving first projection 1418 and second cavity 1409 of depression 1406 receiving the second projection, they snap into place. When ridge 1417, first projection 1418 and the second projection are pulled away from groove 1411, first cavity 1407 and second cavity 1409, respectively, they are released.

Tray 1406 is a custom pan where a specially designed carrier 1400 can attach. Carrier 1400 is a simple clip that easily is installed and removed for cleaning.

Referring to FIG. 14, one of transceivers 16 is mounted in each side of carrier 1400. Transceivers 16 can connect to carrier 1400, for example, by potting transceiver into place using a curing epoxy or other sealant. Transceivers 16 could be installed from outer surface 1414, inner surface 1416 or both of carrier 1400 and then adhered into place with either pressure or heat sensitive adhesive, an epoxy, silicone, or a more permanent ultrasonic weld between a material, for example, plastic, of carrier 1400 and a plastic cap 1420 that forms first projection 1418 on inner surface 1416 of side member 1410. Similarly, an ultrasonic weld may be formed between a material, for example, plastic, of carrier 1400 and a plastic cap that forms the second projection on inner surface 1416 of side member 1408 to connect transceiver 16 to side member 1408. A housing, for example, made of plastic, of transceiver 16 could also slide into a pocket and be glued or welded in from a bottom of carrier 1400. Alternatively, depression 1406 and carrier 1400 can be configured so that transceivers 16 are on opposite sides of tray 14 that have handles 608, 609.

Accordingly, transceivers 16 are mounted on tray 1402 in two locations by carrier 1400 allowing tray 1402 to be inserted in one direction so that reader 18 reads transceiver 16 connected to side member 1408 as shown in Fig. 1, but also spun around 180 degrees and inserted in the exact opposite direction in bin 12 so that reader 18 reads transceiver 16 connected to side member 1410. Since cabinet 10 usually is only sensing one side of tray 1402, transceivers 16 for both locations on carrier 1400 are the same so that readers 18 know that tray 1402 is the same exact tray 1402 of food. Transceivers 16 mounted onto carrier 1400 allow users to be flexible in a restaurant and so that new trays 1402 are not required every time a new product is developed, rather, carrier 1400 is easily removable from tray 1402 and replaceable.

Referring to FIGS. 17-18, another embodiment of a carrier 1700 is shown that connects to a tray (not shown). Carrier 1700 has handles 1702, 1704 that extend from carrier body 1706. Carrier body 1706 has two side walls 1708, 1710 connected by two end walls 1712, 1714 forming a collar that has an opening 1713 at a top and an opening 1715 at a bottom. A rim 1716 extends at a top of side walls 1708, 1710 and end walls 1712, 1714. Carrier body 1706 has an inner surface 1718 and an outer surface 1720. A ridge 1722 is formed on inner surface 1718 of carrier body 1706. Side wall 1708 has an opening 1724 into a slot 1726. Side wall 1710 has an opening 1728 into a slot 1730. Carrier 1700 has a length 1705 from free end of handle 702 to free end of handle 704 of, for example, 20.84 inches.

Referring to FIG. 18, carrier 1700 has a width 1707 of, for example, 10.26 inches. Carrier 1700 has a length 1709 from outer surface 1720 of end wall 1712 to outer surface 1720 of end wall 1714 of, for example, 12.60 inches. Carrier 1700 has a length 1711 from inner surface 1718 of end wall 1712 to inner surface 1718 of end wall 1714 of, for example, 11.16 inches. Carrier 1700 has a width 1713 from inner surface 1718 of side wall 1708 to inner surface 1718 of side wall 1710 of, for example, 8.82 inches. Referring to FIG. 21, openings 1724, 1728 have a length 1729 of, for example, 1.41 inches. Openings 1724, 1728 have a width 1731 of, for example, 0.18 inches. Openings 1724, 1728 have a radius of curvature 1733 of, for example, 0.07 inches.

Referring to FIG. 17A, transceiver 16 is connected to a cap 1732 to form a transceiver assembly 1734. Cap 1732 has a base wall 1735 and a side wall 1737. Transceiver 16 fits into a depression 1736 in side wall 1737. Base wall 1735 is welded to carrier body 1706 in first portion 1740 to form a hermetic seal between transceiver assembly 1734 and carrier body 1706. Alternatively, cap 1732 is ultrasonically welded over transceiver 16 that is an RFID tag connecting transceiver 16 to cap 1732 forming transceiver assembly 1734, and, then, base wall 1735 is welded to carrier body 1706 in first portion 1740. Depression 1736 is sized to fit transceiver 16 that is an RFID tag into depression 1736. Slot 1726 and slot 1730 have interior volumes sized to receive each transceiver assembly 1734. As shown in FIG. 21, a detailed view of slot 1726 for access to a "pocket" where a transceiver 16, for example, an RFID cartridge or tag fits into carrier 1700. Slot 1726 has a first portion 1740 and a second portion 1742. First portion 1740 is sized to receive base wall 1735. Second portion 1742 is sized to receive side wall 1737. Base wall 1735 is ultrasonically welded to carrier body 1706 in second portion 1742 in each of slot 1726 and slot 1730. Alternatively, slot 1726 and slot 1730 each maintain transceiver assembly 1734 in their interior volumes, for example, by friction fit or snap fit. Each transceiver assembly 1734 can be removable from slot 1726 and slot 1730 or permanently affixed to slot 1726 and slot 1730. Alternatively, transceiver 16 can be mounted into both sides of carrier 1700 by a connection similar to carriers 600, 1100, 1300 and 1400. Transceivers 16 can be mounted to end walls 1712, 1714 instead of side walls 1708, 1710.

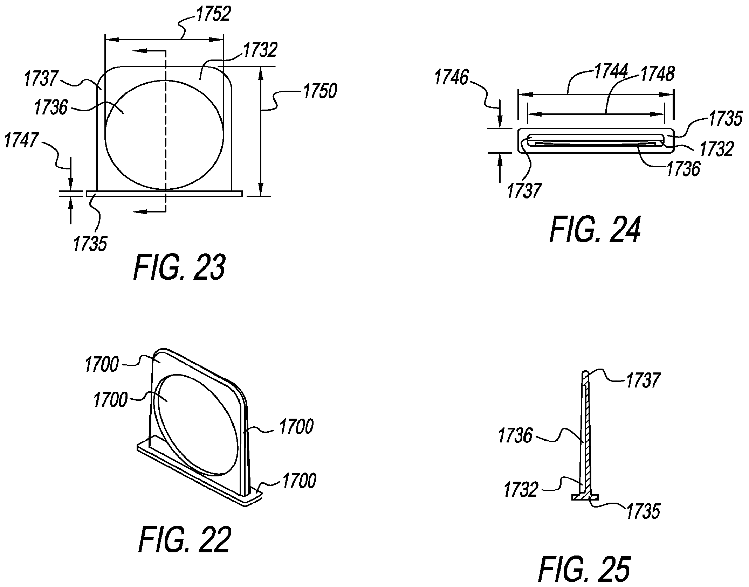

Referring to FIGS. 22-25, base wall 1735 has a length 1744 of, for example, 1.49 inches, a thickness 1746 of, for example, 0.24 inches, and a height 1747 of, for example, 0.05 inches. Side wall 1737 has a length 1748 of, for example, 1.30 inches. Cap 1732 has a height 1750 of, for example, 1.38 inches. Depression 1736 is circular with a diameter 1752 of, for example, 1.15 inches. As shown in FIG. 25, depression 1736 is deeper along height 1750 towards base wall 1735.

Carrier 1700 acts as handles of trays that do not already have molded handles, for example, tray 14 of Fig. 2b already has handles whereas tray 14 of Fig. 2a does not have handles. In this embodiment a tray without handles is simply dropped into carrier 1700 with handles 1702, 1704. Carrier 1700 is slightly shorter than the tray itself allowing carrier 1700 to pick up and support the tray when out of cabinet 10, but allow the tray bottom surface to sit on bin 12 when in place in cabinet 10. The tray can be supported by ridge 1722.

Accordingly, transceivers 16 are mounted on trays in two locations by carrier 1700 allowing trays to be inserted in one direction so that reader 18 reads transceiver 16 connected to side wall 1708, but also spun around 180 degrees and inserted in the exact opposite direction in bin 12 so that reader 18 reads transceiver 16 connected to side wall 1710. Since cabinet 10 usually is only sensing one side of tray, transceivers 16 for both locations on carrier 1700 are the same so that readers 18 know that the tray is the same exact tray of food. Transceivers 16 mounted onto carrier 1700 allow users to be flexible in a restaurant and so that new trays are not required every time a new product is developed, rather, carrier 1700 is easily removable from the trays and replaceable.

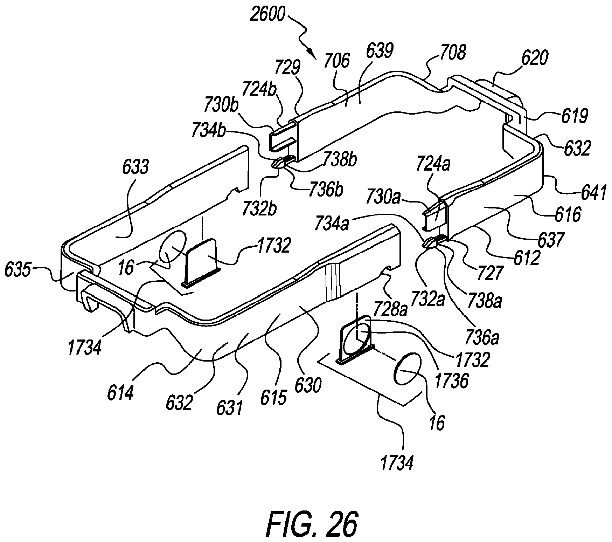

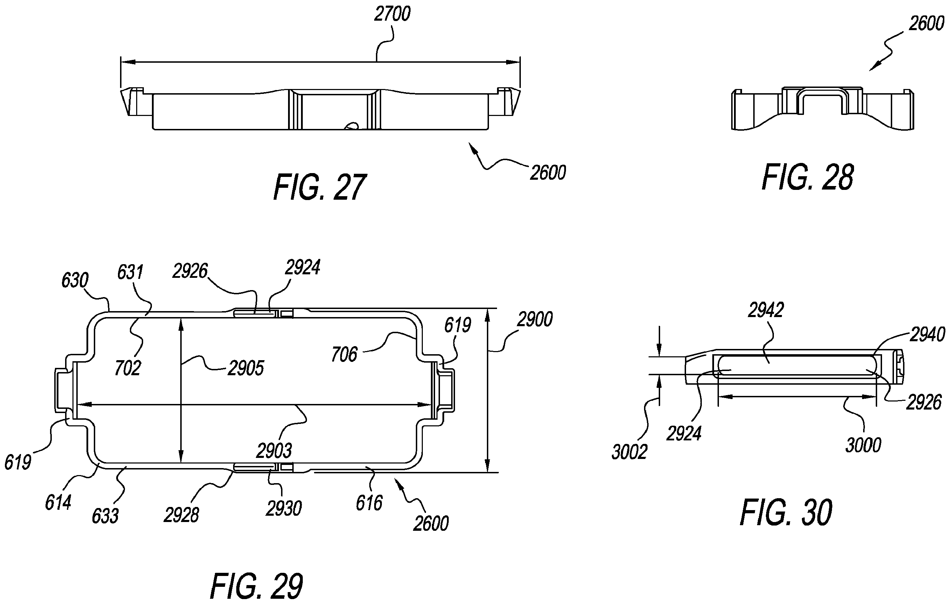

Referring to FIGS. 26-38, a carrier is illustrated that is another embodiment of the carrier of the present disclosure. The carrier is referred to as reference numeral 2600. Carrier 2600 is the same as carrier 612, except, as shown in FIG. 29, carrier 2600 has first frame 630 of first piece 614 that has an opening 2924 and a slot 2926 in side piece 631 and an opening 2928 and a slot 2930 in side piece 633 instead of depression 1002 that receives transceiver 16 of carrier 612. The remaining features are the same for both carrier 2600 and carrier 612 and use the same reference numerals.

First frame 630 of first piece 614 has opening 2924 and slot 2926 in side piece 631 and opening 2928 and slot 2930 in side piece 633. Slot 2926 and slot 2930 have interior volumes sized to receive transceiver assembly 1734 of FIG. 17A. First frame 630 has a greater thickness at slot 2926 and slot 2930 so that slot 2926 and slot 2930 can each be sized to receive transceiver assembly 1734. As shown in FIG. 30, a detailed view of slot 2926 for access to a "pocket" where a transceiver 16, for example, an RFID cartridge or tag fits into carrier 2600. Slot 2926 has a first portion 2940 and a second portion 2942. Similarly, slot 2930 has first portion 2940 and second portion 2942. First portion 2940 is sized to receive base wall 1735. Second portion 2942 is sized to receive side wall 1737. Base wall 1735 is ultrasonically welded to first piece 614 in second portion 1742 in each of slot 2926 and slot 2930. Base wall 1735 is welded to first piece 614 in first portion 2940 to form a hermetic seal between transceiver assembly 1734 and first piece 614. Alternatively, slot 2926 and slot 2930 each maintain transceiver assembly 1734 in their interior volumes, for example, by friction fit or snap fit. Each transceiver assembly 1734 can be removable from slot 2926 and slot 2930 or permanently affixed to slot 2926 and slot 2930.

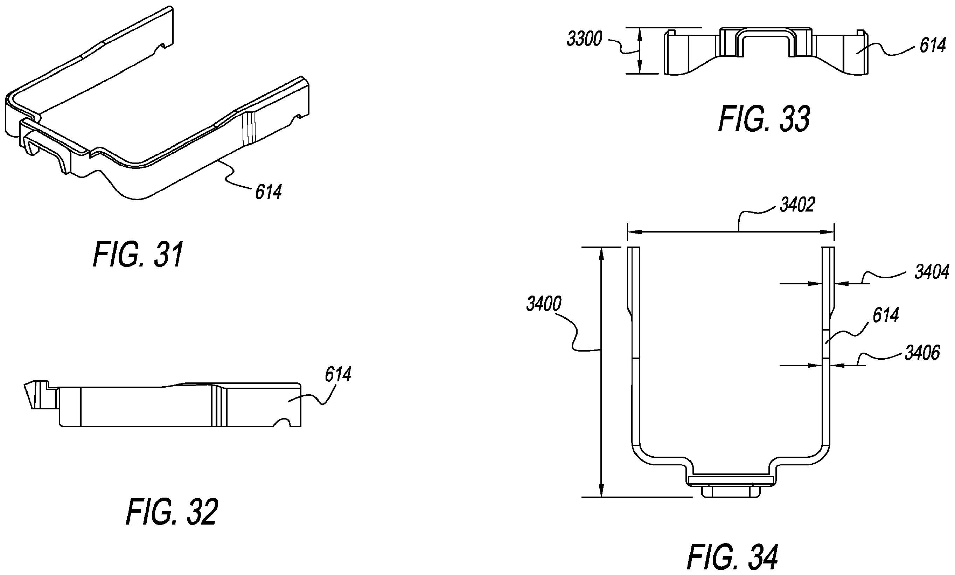

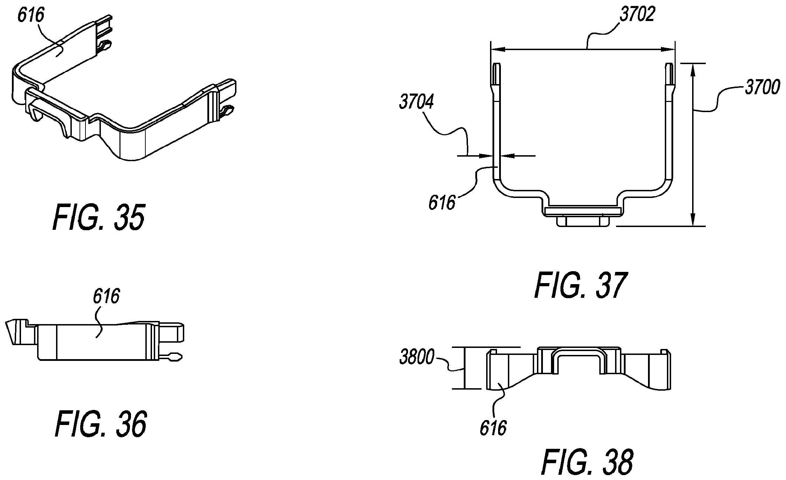

Referring to FIGS. 27 and 29, carrier 2600 has a length 2700 of, for example, 14.33 inches, and a width 2900 of, for example, 6.54 inches. Carrier 2600 has a length 2903 between inner surface 702 of protruded portion 619 of first piece 614 to inner surface 706 of protruded portion 619 of second piece 616 of, for example, 12.74 inches, and a width 2905 between inner surface 702 of side piece 631 and inner surface 702 of side piece 633 of, for example, 5.84 inches. Referring to FIG. 30, first portion 2940 of slot 2926 and slot 2930 each have a length 3000 of, for example, 1.41 inches, and a thickness 3002 of, for example, 0.18 inches. Referring to FIGS. 33 and 34, first piece 614 has a length 3400 of, for example, 8.89 inches, a width 3402 of, for example, 6.54 inches, and a height 3300 of, for example, 1.63 inches. Referring to FIG. 34, first piece 614 has a thickness 3404 at slot 2926 and slot 2930 of, for example, 0.35 inches, and a thickness 3406 adjacent slot 2926 and slot 2930 of, for example, 0.25 inches. Referring to FIGS. 37 and 38, second piece 616 has a length 3700 of, for example, 6.29 inches, a width 3702 of, for example, 6.54 inches, a thickness 3704 of, for example, 0.25 inches, and a height 3800 of, for example, 1.63 inches.

Carriers 612, 1100, 1300, 1400, 1700 and 2600 can be color coded to indicate what food is being held in their respective tray. Carriers 612, 1100, 1300, 1400, 1700 and 2600 are easily removable from trays for cleaning. Carriers 612, 1100, 1300, 1400, 1700 and 2600 are interchangeable so that a tray can be connected to a first of each of carriers 612, 1100, 1300, 1400, 1700 and 2600 to hold a first food so that cabinet 10 will recognize that the tray is holding the first food, and, then, the tray can be connected to a second of each of carriers 612, 1100, 1300, 1400, 1700 and 2600 to hold a second food that is different from the first food and cabinet 10 will recognize that the tray is holding the second food.

Carriers 612, 1100, 1300, 1400, 1700 and 2600 can be made of material of a certain thickness that is radio frequency transparent that would allow the signals to transfer freely between enclosed transceivers 16, for example, RFID tags, and reader 18, for example, the antenna, for desirable distances therebetween. Carriers 612, 1100, 1300, 1400, 1700 and 2600 can be made of material that has chemical compatibility such as plastic that can withstand contact with cleaning chemicals, soaps, and sanitizers on a daily basis. Carriers 612, 1100, 1300, 1400, 1700 and 2600 can be made of material that can easily be ultrasonically welded to completely seal transceiver 16, for example, the RFID tag, into carriers 612, 1100, 1300, 1400, 1700 and 2600. Carriers 612, 1100, 1300, 1400, 1700 and 2600 can be made of, for example, nylon. Carriers 612, 1100, 1300, 1400, 1700 and 2600 can be made of material that withstands deformation needed for snap fit connections.

The present disclosure having been thus described with particular reference to the preferred forms thereof, it will be obvious that various changes and modifications may be made therein without departing from the scope of the present invention as defined in the appended claims.

## Claims

1. A carrier (612; 1100; 1300; 1400; 1700; 2600) comprising:
a carrier body (615; 1101; 1303; 1403; 1706)
that is removably connectable to a tray (14) that holds food in a cabinet (10);
and
a transceiver (16) being connected to said carrier body on a first side, said transceiver being configured so that a reader (18) identifies the tray, **characterized in that** said transceiver is a first transceiver, further comprising a second transceiver, wherein said second transceiver is connected to said carrier body on a second side, and wherein said first transceiver and said second transceiver are configured so that a reader identifies the same tray by each of said first transceiver and said second transceiver.

2. The carrier of claim 1, wherein said second transceiver is connected to said carrier body on said second side that is opposite said first side.

3. The carrier of claim 2, wherein said carrier body is rotated around 180 degrees from a first position to a second position and positioned in a bin in either said first position or said second position so that said reader can read said first transceiver in said first position and said second transceiver in said second position.

4. The carrier of claim 1, wherein said carrier body has a first piece and a second piece that together form a collar around said tray.

5. The carrier of claim 4, wherein said tray has a tray body and a rim around an outside of an opening in said tray, and wherein said tray has a first handle and a second handle connected to opposite sides of an outer surface of said tray so that, in a connected position, said first piece is connected to said second piece around said tray body.

6. The carrier of claim 5, wherein said first piece is positioned between said rim and one of said first handle and said second handle and said second piece is positioned between said rim and another of said first handle and said second handle in said connected position to maintain said carrier on said tray.

7. The carrier of claim 5, wherein said first piece has a first frame that is shaped complementary to a shape of said tray body such that said first frame has two first side pieces and a first end piece forming a U-shape, and wherein said second piece has a second frame that is shaped complementary to the shape of said tray body such that said second frame has two second side pieces and a second end piece forming a U-shape.

8. The carrier of claim 7, wherein said first piece has a first connector on an end of each of said two first side pieces and second piece has a second connector on an end of each of said two second side pieces so that said first piece and said second piece are selectively connected and disconnected from one another.

9. The carrier of claim 1, wherein said carrier has a size so that said tray can be stacked on another tray without wedging into place that would cause difficult rem oval.

10. The carrier of claim 1, wherein said carrier body has a single piece that forms a collar around said tray.

11. The carrier of claim 10, wherein said tray has a plurality of handles that each is positioned through a cutout in one of a first connector and a second connector so that each of said first connector and said second connector connect to one of said plurality of handles and said carrier body to connect said carrier body to said tray.

12. The carrier of claim 11, wherein said carrier body has at least a first tab and a second tab, wherein said first tab is inside of said first connector and said second tab is inside of said second connector to connect said carrier body to both said first connector and said second connector.

13. The carrier of claim 10, wherein said carrier body has a first clip member and second clip member that are received in a plurality of apertures in a handle of said tray to secure said carrier body to said tray by snap fit.

14. The carrier of claim 10, wherein said carrier body has connectors that connect to a plurality of handles of said tray.

15. The carrier of claim 1, wherein said carrier body has a first side member and a second side member connected by a bottom member forming a U-shape, wherein said carrier body has an outer surface and an inner surface, wherein said inner surface has a first projection on said first side member and a second projection on said second side member.

16. The carrier of claim 15, wherein said bottom member crosses under said tray and snaps said carrier body into place by a first cavity of a depression in said tray receiving said first projection and a second cavity of said depression receiving said second projection on opposite sides of said tray to secure said carrier body to said tray.

17. The carrier of claim 1, further comprising at least one handle that extends from said carrier body, wherein said carrier body has an opening at a top and an opening at a bottom.

18. The carrier of claim 17, wherein said carrier body receives said tray through said opening at said top.

## Patentansprüche

1. Träger (612; 1100; 1300; 1400; 1700; 2600), umfassend:
einen Trägerkörper (615; 1101; 1303; 1403; 1706), der abnehmbar mit einem Einsatz (14) verbunden werden kann, der Lebensmittel in einem Schrank (10) aufnimmt, und
ein Sende-Empfangsgerät (16), das mit dem Trägerkörper auf einer ersten Seite verbunden ist, wobei das Sende-Empfangsgerät so konfiguriert ist, dass ein Lesegerät (18) den Einsatz identifiziert,
**dadurch gekennzeichnet, dass** das Sende-Empfangsgerät ein erstes Sende-Empfangsgerät ist, ferner umfassend ein zweites Sende-Empfangsgerät, wobei das zweite Sende-Empfangsgerät mit dem Trägerkörper auf einer zweiten Seite verbunden ist und wobei das erste Sende-Empfangsgerät und das zweite Sende-Empfangsgerät so konfiguriert sind, dass ein Lesegerät denselben Einsatz jeweils durch das erste Sende-Empfangsgerät und das zweite Sende-Empfangsgerät identifiziert.

2. Träger nach Anspruch 1, wobei das zweite Sende-Empfangsgerät mit dem Trägerkörper auf der zweiten Seite, die der ersten Seite gegenüberliegt, verbunden ist.

3. Träger nach Anspruch 2, wobei der Trägerkörper um 180 Grad von einer ersten Position in eine zweite Position gedreht und entweder in der ersten Position oder der zweiten Position in einem Behälter positioniert wird, so dass das Lesegerät das ersten Sende-Empfangsgerät in der ersten Position und das zweiten Sende-Empfangsgerät in der zweiten Position lesen kann.

4. Träger nach Anspruch 1, wobei der Trägerkörper ein erstes Teil und ein zweites Teil aufweist, die zusammen eine Manschette um den Einsatz bilden.

5. Träger nach Anspruch 4, wobei der Einsatz einen Einsatzkörper und einen Rand um eine Außenseite einer Öffnung in dem Einsatz herum aufweist, und wobei der Einsatz einen ersten Griff und einen zweiten Griff aufweist, die mit gegenüberliegenden Seiten einer Außenfläche des Einsatzes verbunden sind, so dass das erste Teil mit dem zweiten Teil in einer verbundenen Position um den Einsatzkörper herum verbunden ist.

6. Träger nach Anspruch 5, wobei in der verbundenen Position das erste Teil zwischen dem Rand und einem aus dem ersten Griff und dem zweiten Griff positioniert ist und das zweite Teil zwischen dem Rand und einem anderen aus dem ersten Griff und dem zweiten Griff positioniert ist, so dass der Träger an dem Einsatz gehalten wird.

7. Träger nach Anspruch 5, wobei das erste Teil einen ersten Rahmen hat, der komplementär zu einer Form des Einsatzkörpers geformt ist, so dass der erste Rahmen zwei erste Seitenteile und ein erstes Endteil aufweist, die eine U-Form bilden, und wobei das zweite Teil einen zweiten Rahmen aufweist, der komplementär zu der Form des Einsatzkörpers geformt ist, so dass der zweite Rahmen zwei zweite Seitenteile und ein zweites Endteil aufweist, die eine U-Form bilden.

8. Träger nach Anspruch 7, wobei das erste Teil ein erstes Verbindungselement an einem Ende jedes der beiden ersten Seitenteile aufweist und das zweite Teil ein zweites Verbindungselement an einem Ende jedes der beiden zweiten Seitenteile aufweist, so dass das erste Teil und das zweite Teil selektiv verbunden und voneinander gelöst werden.

9. Träger nach Anspruch 1, wobei der Träger eine derartige Größe hat, dass der Einsatz auf einen anderen Einsatz gestapelt werden kann, ohne sich zu verkeilen, was das Entnehmen schwierig machen würde.

10. Träger nach Anspruch 1, wobei der Trägerkörper ein einziges Teil aufweist, das eine Manschette um den Einsatz bildet.

11. Träger nach Anspruch 10, wobei der Einsatz eine Mehrzahl an Griffen aufweist, die jeweils durch einen Ausschnitt in einem aus einem ersten Verbindungselement und einem zweiten Verbindungselement positioniert sind, so dass jedes aus dem ersten Verbindungselement und dem zweiten Verbindungselement sich mit einem der Mehrzahl an Griffen und dem Trägerkörper verbinden, so dass der Trägerkörper mit dem Einsatz verbunden ist.

12. Träger nach Anspruch 11, wobei der Trägerkörper mindestens eine erste Lasche und eine zweite Lasche aufweist, wobei sich die erste Lasche innerhalb des ersten Verbindungselements und die zweite Lasche sich innerhalb des zweiten Verbindungselements befindet, so dass der Trägerkörper sowohl mit dem ersten Verbindungselement als auch mit dem zweiten Verbindungselement verbunden ist.

13. Träger nach Anspruch 10, wobei der Trägerkörper ein erstes Clipelement und ein zweites Clipelement aufweist, die in einer Mehrzahl an Öffnungen in einem Griff des Einsatzes aufgenommen werden, so dass der Trägerkörper mittels Einrasten an dem Einsatz befestigt wird.

14. Träger nach Anspruch 10, wobei der Trägerkörper Verbindungselemente aufweist, die sich mit einer Mehrzahl an Griffen des Einsatzes verbinden.

15. Träger nach Anspruch 1, wobei der Trägerkörper ein erstes Seitenelement und ein zweites Seitenelement aufweist, die durch ein Bodenelement verbunden sind, was eine U-Form bildet, wobei der Trägerkörper eine Außenfläche und eine Innenfläche aufweist, wobei die Innenfläche einen ersten Vorsprung an dem ersten Seitenelement und einen zweiten Vorsprung an dem zweiten Seitenelement aufweist.

16. Träger nach Anspruch 15, wobei das Bodenelement unter dem Einsatz verläuft und den Trägerkörper dadurch einrastet, dass auf gegenüberliegenden Seiten des Einsatzes ein erster Hohlraum einer Vertiefung in dem Einsatz den ersten Vorsprung aufnimmt und ein zweiter Hohlraum dieser Vertiefung den zweiten Vorsprung aufnimmt, so dass der Trägerkörper an dem Einsatz befestigt wird.

17. Träger nach Anspruch 1, der ferner mindestens einen Griff umfasst, der von dem Trägerkörper weg ragt, wobei der Trägerkörper eine Öffnung an einer Oberseite und eine Öffnung an einer Unterseite aufweist.

18. Träger nach Anspruch 17, wobei der Trägerkörper den Einsatz durch die Öffnung an der Oberseite aufnimmt.

## Revendications

1. Support (612 ; 1100 ; 1300 ; 1400 ; 1700 ; 2600) comprenant :
un corps de support (615 ; 1101 ; 1303 ; 1403 ; 1706) qui peut être relié de manière amovible à un plateau (14) qui reçoit des aliments dans une armoire (10) ;
et
un émetteur-récepteur (16) qui est connecté audit corps de support sur un premier côté, ledit émetteur-récepteur étant configuré de telle sorte qu'un lecteur (18) identifie le plateau,
**caractérisé en ce que** ledit émetteur-récepteur est un premier émetteur-récepteur, comprenant en outre un second émetteur-récepteur, dans lequel ledit second émetteur-récepteur est connecté audit corps de support sur un second côté, et dans lequel ledit premier émetteur-récepteur et ledit second émetteur-récepteur sont configurés de telle sorte qu'un lecteur identifie le même plateau par chacun dudit premier émetteur-récepteur et dudit second émetteur-récepteur.

2. Support selon la revendication 1, dans lequel ledit second émetteur-récepteur est connecté audit corps de support sur ledit second côté qui est opposé audit premier côté.

3. Support selon la revendication 2, dans lequel ledit corps de support est tourné de 180 degrés d'une première position à une seconde position et est positionné dans un bac dans soit ladite première position ou ladite seconde position de telle sorte que ledit lecteur peut lire ledit premier émetteur-récepteur dans ladite première position et ledit second émetteur-récepteur dans ladite seconde position.

4. Support selon la revendication 1, dans lequel ledit corps de support a une première pièce et une seconde pièce qui forment ensemble un col autour dudit plateau.

5. Support selon la revendication 4, dans lequel ledit plateau a un corps de plateau et un rebord autour de l'extérieur d'une ouverture dans ledit plateau, et dans lequel ledit plateau a une première poignée et une seconde poignée connectées aux côtés opposés d'une surface extérieure dudit plateau de telle sorte que, dans une position connectée, ladite première pièce est connectée à ladite seconde pièce autour dudit corps de plateau.

6. Support selon la revendication 5, dans lequel ladite première pièce est positionnée entre ledit rebord et une de ladite première poignée et de ladite seconde poignée, et ladite seconde pièce est positionnée entre ledit rebord et l'autre de ladite première poignée et de ladite seconde poignée dans ladite position connectée pour maintenir ledit support sur ledit plateau.

7. Support selon la revendication 5, dans lequel ladite première pièce a un premier cadre qui a une forme complémentaire à une forme dudit corps de support de telle sorte que ledit premier cadre a deux pièces sur le premier côté et une première pièce d'extrémité en forme de U, et dans lequel ladite seconde pièce a un second cadre qui a une forme complémentaire à la forme dudit corps de support de telle sorte que ledit second cadre a deux pièces sur le second côté et une seconde pièce d'extrémité en forme de U.

8. Support selon la revendication 7, dans lequel ladite première pièce a un premier connecteur sur une extrémité de chacune desdites deux pièces sur le premier côté et la seconde pièce a un second connecteur sur une extrémité de chacune desdites des deux pièces sur le second côté, de telle sorte que ladite première pièce et ladite seconde pièce sont sélectivement connectées et déconnectées l'une de l'autre.

9. Support selon la revendication 1, dans lequel ledit support a une dimension de telle sorte que ledit plateau peut être empilé sur un autre plateau sans se coincer en place, ce qui rendrait son retrait difficile.

10. Support selon la revendication 1, dans lequel ledit corps de support a une seule pièce qui forme un col autour dudit plateau.

11. Support selon la revendication 10, dans lequel ledit plateau a une pluralité de poignées, dont chacune est positionnée à travers une découpe dans un parmi un premier connecteur et un second connecteur de telle sorte que chacun dudit premier connecteur et dudit second connecteur se connecte à l'un de ladite pluralité de poignées et dudit corps du support pour connecter ledit corps de support audit plateau.

12. Support selon la revendication 11, dans lequel ledit corps de support a au moins une première patte et une seconde patte, dans lequel ladite première patte est à l'intérieur dudit premier connecteur et ladite seconde patte est à l'intérieur dudit second connecteur pour connecter ledit corps de support audit premier connecteur et audit second connecteur.

13. Support selon la revendication 10, dans lequel ledit corps de support a un premier élément de fixation et un second élément de fixation qui sont reçus dans une pluralité d'ouvertures dans une poignée dudit plateau pour fixer ledit corps de support audit plateau par encliquetage.

14. Support selon la revendication 10, dans lequel ledit corps de support a des connecteurs qui se connectent à une pluralité de poignées dudit plateau.

15. Support selon la revendication 1, dans lequel ledit corps de support a un premier élément latéral et un second élément latéral connectés par un élément inférieur en forme de U, dans lequel ledit corps de support a une surface extérieure et une surface intérieure, dans lequel ladite surface intérieure a une première saillie sur ledit premier élément latéral et une seconde saillie sur ledit second élément latéral.

16. Support selon la revendication 15, dans lequel ledit élément inférieur traverse sous ledit plateau et clipse ledit corps de support en place par une première cavité d'une dépression dans ledit plateau recevant ladite première saillie et une seconde cavité de ladite dépression recevant ladite seconde saillie sur des côtés opposés dudit plateau pour fixer ledit support de corps audit plateau.

17. Support selon la revendication 1, comprenant en outre au moins une poignée qui s'étend depuis ledit corps de support, dans lequel ledit corps de support a une ouverture au sommet et une ouverture au fond.

18. Support selon la revendication 17, dans lequel ledit corps de support reçoit ledit plateau à travers ladite ouverture audit sommet.
